# EUROPEAN PATENT APPLICATION

(11) **EP 4 696 509 A1**
(43) Date of publication of application: **18.02.2026**
(21) Application number: 24788541.1
(22) Date of filing: 22.03.2024
(51) Int. Cl.: B41J 2/01, G03B 35/00

(54) **PRINTING DEVICE AND PRINTING METHOD**

(30) Priority: 10.04.2023 JP 2023063680
(71) Applicant: MUTOH INDUSTRIES LTD., Tokyo 154-8560 (JP)
(72) Inventor: KAWAMOTO, Keigo, Tokyo 154-8560 (JP); ARAKI, Kota, Tokyo 154-8560 (JP)
(74) Representative: Grünecker Patent- und Rechtsanwälte PartG mbB
(86) International application number: PCT/JP2024/011346
(87) International publication number: WO 2024/214512

(57) **Abstract**

A printing device forms an image layer by printing with a color ink a composite image obtained by dividing a plurality of original images in a sub-scanning direction and combining the divided plurality of original images, forms an intermediate layer by printing on the image layer with a transparent ink a solid-printing image, and forms a lens layer by printing on the intermediate layer with the transparent ink a lens image consisting of a plurality of long lenses extending in a main scanning direction and aligned in the sub-scanning direction correspondingly to the composite image. When the lens layer is formed, the printing head ejects the transparent ink onto a recording medium while the printing head is moving in the main scanning direction, and the transparent ink on the recording medium is cured by the curing device.

## Description

### TECHNICAL FIELD

The present invention relates to a printing device and a printing method that enable laminated printing of a lenticular lens on an image layer.

### BACKGROUND ART

Conventionally, there is known a printing device such as silk screen printing and an ink jet printer, in which ink is ejected to dot forming positions of a recording medium from a printing head to print an image or the like, and which enables a lenticular lens by which a pattern changes depending on an angle of viewing, to be printed on an image layer.

### PRIOR ART DOCUMENT

### PATENT DOCUMENT

Patent Document 1: Japanese Laid-Open Patent Publication No. 2007-144635
Patent Document 2: Japanese Laid-Open Patent Publication No. 2009-006531
Patent Document 3: Japanese Laid-Open Patent Publication No. 2006-001153
Patent Document 4: Japanese Laid-Open Patent Publication No. 2006-251608
Patent Document 5: Japanese Utility Model Registration No. 3232898

### SUMMARY OF THE INVENTION

### PROBLEM TO BE SOLVED BY THE INVENTION

The present invention has an object of providing a printing device and a printing method that enable laminated printing of good efficiency, while allowing a lens layer to be accurately positioned with respect to an image layer.

### MEANS FOR SOLVING THE PROBLEM

A printing device according to one aspect of the present invention comprises: a printing head having a nozzle and a curing device, the nozzle ejecting an ink including a color ink and a transparent ink, and the curing device curing the ink that has been ejected from the nozzle and has attached onto a recording medium; a drive mechanism that moves the printing head relatively to the recording medium in a main scanning direction and in a sub-scanning direction intersecting the main scanning direction; a control unit that controls the printing head and the drive mechanism to execute print processing of a plurality of printing layers onto the recording medium using the color ink and the transparent ink; and a print setting processing device that performs print setting processing of the plurality of printing layers based on printing data and print setting data. The printing data includes: a composite image obtained by dividing a plurality of original images in the sub-scanning direction and combining the divided plurality of original images; a solid-printing image; and a lens image consisting of a plurality of long lenses aligned in the sub-scanning direction correspondingly to the composite image. The print setting data includes print setting information for setting printing conditions of each of the printing layers. The print setting processing device, based on the print setting data, sets an image layer obtained by printing the composite image with the color ink, sets an intermediate layer obtained by printing the solid-printing image on the image layer with the transparent ink, and sets a lens layer obtained by printing the lens image on the intermediate layer with the transparent ink. The print setting processing device sets so that when the lens layer is formed, the printing head ejects the transparent ink onto the recording medium while the printing head is moving in the main scanning direction, and the transparent ink on the recording medium is cured by the curing device.

In one embodiment, the print setting processing device sets so that when the lens layer is formed, the printing head ejects the transparent ink onto the recording medium while the printing head is moving in the main scanning direction, and the ejected transparent ink on the recording medium is cured by the curing device prior to the transparent ink consolidating on the recording medium or subsequent to it having consolidated on the recording medium.

In another embodiment, the print setting processing device sets so that when the lens layer is formed, the printing head ejects the transparent ink onto the recording medium solely while the printing head is moving in one orientation of the main scanning direction, and the transparent ink on the recording medium is cured by the curing device while the printing head is moving in the other orientation of the main scanning direction.

In another embodiment, the print setting processing device sets so that the image layer and the lens layer are formed by the printing head ejecting the ink onto the recording medium solely while the printing head is moving in a common one orientation of the main scanning direction, and the intermediate layer is formed by the printing head ejecting the ink onto the recording medium while the printing head is moving in both directions of the main scanning direction.

In another embodiment, the print setting processing device sets so that the intermediate layer consists of a plurality of the printing layers.

In another embodiment, the lens image is created so that when the lens layer is formed, the lens image has a width narrower than a spacing in the sub-scanning direction of the long lenses.

In yet another embodiment, the print setting data includes at least one of information related to a scanning direction during ink ejection of the printing head, a gap between the printing head and the recording medium during ink ejection of the printing head, and the ink being used during ink ejection of the printing head.

In yet another embodiment, the printing data further includes a non-composite image printed in a different region from at least a region where the composite image is printed, and the print setting processing device, based on the printing data, sets an image layer obtained by printing the composite image and the non-composite image with the color ink.

In yet another embodiment, the printing data includes an integrated image that includes the composite image and a non-composite image printed in a different region from a region where the composite image is printed, and the print setting processing device, based on the printing data, sets an image layer obtained by printing the integrated image with the color ink.

In yet another embodiment, the printing data further includes the solid-printing image printed at least below a region where the composite image is printed, and the print setting processing device, based on the printing data, sets a concealing layer obtained by printing the solid-printing image below the composite image with a white ink.

A printing method according to another aspect of the present invention is a method of printing by which a printing head is moved relatively to a recording medium in a main scanning direction and in a sub-scanning direction intersecting the main scanning direction, an ink including a color ink and a transparent ink is ejected from the printing head onto the recording medium, and the ink that has attached onto the recording medium is cured by a curing device to print a plurality of printing layers onto the recording medium using the color ink and the transparent ink, wherein based on printing data that includes: a composite image obtained by dividing a plurality of original images in the sub-scanning direction and combining the divided plurality of original images; a solid-printing image; and a lens image consisting of a plurality of long lenses aligned in the sub-scanning direction correspondingly to the composite image, and based on print setting data that includes print setting information for setting printing conditions of each of the printing layers, the composite image is printed with the color ink, whereby an image layer is formed, the solid-printing image is printed on the image layer with the transparent ink, whereby an intermediate layer is formed, the lens image is printed on the intermediate layer with the transparent ink, whereby a lens layer is formed, and when the lens layer is formed, the printing head ejects the transparent ink onto the recording medium while the printing head is moving in the main scanning direction, and the transparent ink on the recording medium is cured by the curing device.

### EFFECT OF THE INVENTION

The present invention enables printing to be performed with a lens layer accurately positioned with respect to an image layer.

### BRIEF DESCRIPTION OF THE DRAWINGS

[FIG. 1] FIG. 1 is a diagram showing schematic configuration of a printing device according to a first embodiment of the present invention.
[FIG. 2] FIG. 2 is a block diagram showing schematically functional configuration of same printing device.
[FIG. 3] FIG. 3 is a diagram showing schematically a printing head of same printing device.
[FIG. 4] FIG. 4 is a flowchart showing a method of laminated printing by same printing device.
[FIG. 5] FIG. 5 is a schematic view for explaining printing data created by same method of laminated printing.
[FIG. 6] FIG. 6 is a diagram showing a setting example of each of printing layers in same method of laminated printing.
[FIG. 7] FIG. 7 is a diagram showing a setting example of each of printing layers in same method of laminated printing.
[FIG. 8] FIG. 8 is a cross-sectional view of a laminated printing object printed by same method of laminated printing.
[FIG. 9] FIG. 9 is a schematic view for explaining same method of laminated printing.
[FIG. 10] FIG. 10 is a schematic view for explaining same method of laminated printing.
[FIG. 11] FIG. 11 is a schematic view for explaining same method of laminated printing.
[FIG. 12] FIG. 12 is a diagram for explaining a printing device and printing method according to a second embodiment.
[FIG. 13] FIG. 13 is a diagram for explaining same printing device and printing method.
[FIG. 14] FIG. 14 is a diagram showing an impression of an image printed on a recording medium by a method of laminated printing due to a printing device according to a third embodiment.
[FIG. 15] FIG. 15 is a flowchart showing the method of laminated printing by same printing device.
[FIG. 16] FIG. 16 is an enlarged cross-sectional view taken along the line A-A' of FIG. 14(a).
[FIG. 17] FIG. 17 is a diagram showing a setting example of each of printing layers in same method of laminated printing.
[FIG. 18] FIG. 18 is a diagram showing a setting example of each of printing layers in same method of laminated printing.
[FIG. 19] FIG. 19 is a diagram for explaining a first printing method of a non-composite image and a composite image in same method of laminated printing.
[FIG. 20] FIG. 20 is a diagram for explaining a second printing method of a non-composite image and a composite image in same method of laminated printing.

### EMBODIMENTS FOR CARRYING OUT THE INVENTION

Printing devices and printing methods according to embodiments of the present invention will be described in detail below with reference to the accompanying drawings. However, the embodiments below do not limit the inventions according to each of the claims, moreover, not all of the combinations of features described in the embodiments are necessarily essential to the means for solving the problem of the invention. Note that in the embodiments below, identical or corresponding configuring elements will be assigned with identical symbols, and duplicated descriptions thereof will be omitted. Moreover, in the embodiments below, arrangements, reduction scales, dimensions, and so on, of each of the configuring elements will sometimes be shown exaggerated or under-emphasized, in a state not in agreement with actual configuring elements, and some of the configuring elements will sometimes be shown with their description omitted.

### [First Embodiment]

### [Configuration of Printing Device]

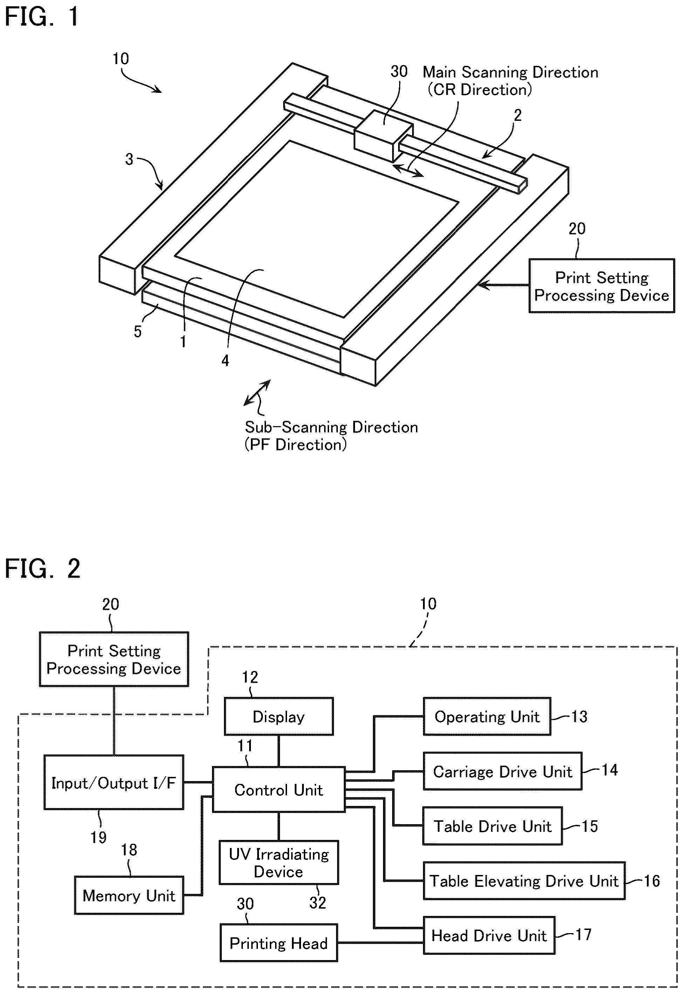

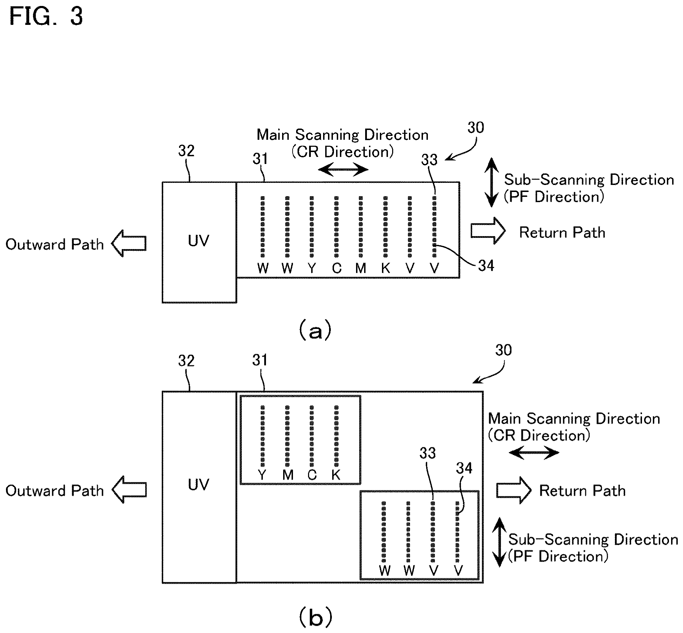

FIG. 1 is a diagram showing schematic configuration of a printing device according to a first embodiment of the present invention. FIG. 2 is a block diagram showing schematically functional configuration of the printing device. FIG. 3 is a diagram showing schematically a printing head of the printing device.

As shown in FIG. 1, the printing device of the present embodiment includes: an ink jet printer 10; and a print setting processing device 20 consisting of a computer or the like. The ink jet printer 10 and the print setting processing device 20 may be connected via a network such as a LAN (Local Area Network) or WAN (Wide Area Network). The ink jet printer 10 is a device that by for example ejecting onto a recording medium (of the likes of paper, a sheet, a plate-like member, or a member having a slight thickness such as a casing for a mobile phone) 4 placed on a table 1 an ultraviolet curing type ink (UV ink), and curing the UV ink, enables multi-layer printing (laminated printing) where a plurality of printing layers are overlaid on each other, to be performed. The ink jet printer 10 comprises the table 1, a carriage drive mechanism 2, a table drive mechanism 3, a table elevating mechanism 5, and a printing head 30.

The printing head 30 is configured capable of moving in a main scanning direction (CR direction) indicated by the arrows in the diagrams, by the carriage drive mechanism 2. Moreover, the table 1 is configured capable of moving in a sub-scanning direction (PF direction) indicated by the arrows in the diagrams, by the table drive mechanism 3. As a result, the printing head 30 is configured capable of moving relatively to the recording medium 4 in the main scanning direction and in the sub-scanning direction. Moreover, the table 1 is configured capable of being raised/lowered in an up-down direction perpendicular to the main scanning and sub-scanning directions, by the table elevating mechanism 5. Note that distance between the printing head 30 and table 1 may be configured changeable by height of the printing head 30 being adjusted, too. In the case where the table 1 is not moved in the sub-scanning direction, the carriage drive mechanism 2 may be configured capable of moving in the sub-scanning direction (PF direction) indicated by the arrows in the diagrams. Moreover, in the case of a structure where the table 1 and carriage drive mechanism 2 are not moved, the recording medium 4 or table 1 with the recording medium 4 placed thereon may be conveyed in the sub-scanning direction (PF direction) sandwiched by the likes of a pressure roller and a drive roller (not illustrated). Moreover, there may be employed a structure where the recording medium 4 is conveyed by a feed roller and a take-up roller (not illustrated) provided in front of and to the rear of the table 1. Moreover, there may be employed a structure where a belt (not illustrated) being a placement stand is delivered over the table 1, and the recording medium 4 is conveyed placed on the belt.

The printing device of the present embodiment will be explained exemplifying multi-layer printing (laminated printing) using the above-described UV ink. However, the ink used is not limited to the above-described UV ink, and there may be utilized an electromagnetic wave curing type ink using the likes of an electron beam (EB ink), an ink cured using another chemical reaction, and so on, and a reactive curing type ink utilizing light, heat, a chemical reaction, and so on. Six colors of ink may be adopted as the UV ink used, that is, color inks of the four colors cyan (C), magenta (M), yellow (Y), and black (K), and, in addition, inks of the colors white (W) and varnish (V), for example. Of these, varnish (V) is a transparent ink, and for this varnish (V), there may be employed an ultraviolet curing type transparent resin ink, for example.

The print setting processing device 20 is inputted with printing data including image data, and with print setting data, and executes print setting processing of each of the printing layers. The printing data includes a plurality of items of image data. When lenticular printing is performed, the image data includes a composite image, a solid-printing image, and a lens image. The image data includes lines, characters, figures, photographs, and so on in the likes of PDF (Portable Document Format) and PS (PostScript: registered trademark), for example. The print setting data may be configured by data having respectively differing printing conditions for each of the printing layers during laminated printing, for example. The printing conditions of the printing data may be configured to further include at least one of information related to scanning direction of a carriage of the printing head 30, a gap between the printing head 30 and recording medium 4, and the UV ink to be used.

Moreover, the print setting processing device 20 outputs to the ink jet printer 10 raster image data of each of the printing layers. The image data included in the printing data inputted to the print setting processing device 20 is converted to raster image data (CMYK data) of the likes of a TIFF image consisting of raster data, by the print setting processing device 20 having an RIP (Raster Image Processor) function, for example. The image data included in the printing data may be priorly converted to raster image data externally.

The print setting processing device 20 performs the likes of color conversion processing and half-tone processing, for example, to implement various kinds of conversion processing on the image data (raster image data) and thereby generate image data for printing. This image data may be configured by the four colors of cyan (C), magenta (M), yellow (Y), and black (K). It may be configured too by six color data additionally adding white (W) and varnish (V). Note that white (W) and varnish (V) are frequently used mainly in applications where gapless printing (solid-printing) is performed.

Note that the print setting processing device 20 has an unillustrated memory unit that stores various kinds of information such as data of various kinds of print profiles and processing tables, and so on, data of a display driver and printer driver, and so on, data of a program for executing adjustment processing of printing position, data of print processing of the plurality of printing layers including the lenticular lens, and various kinds of control programs, and so on, and the printing data including the above-mentioned various kinds of image data.

As shown in FIG. 2, the ink jet printer 10 has a control unit 11 and an input/output I/F (interface) 19. The control unit 11 controls various units for laminated printing, based on each of the image data for printing and various kinds of setting data, inputted via the input/output I/F 19. In addition, the ink jet printer 10 comprises: a display 12 acting as a display device; and an operating unit 13. The display 12 has a display screen displaying various kinds of information. The operating unit 13 receives operation inputs by a user of the ink jet printer 10. The display 12 may be included in the operating unit 13 of the ink jet printer 10.

Furthermore, the ink jet printer 10 comprises: a carriage drive unit 14 that drives the carriage drive mechanism 2; a table drive unit 15 that drives the table drive mechanism 3; a table elevating drive unit 16 that drives the table elevating mechanism 5; a head drive unit 17 that drives the printing head 30; and a memory unit 18. The carriage drive unit 14, table drive unit 15, table elevating drive unit 16, and head drive unit 17 cause the carriage drive mechanism 2, table drive mechanism 3, table elevating mechanism 5, and printing head 30 to operate so as to print the image data based on the printing conditions, in response to a control command from the control unit 11. Note that the printing head 30 is provided with an ultraviolet (UV) irradiating device 32 having a UV-LED lamp, or the like, acting as a curing device for curing the ink. The memory unit 18 stores various kinds of setting values, and so on, required for control of the control unit 11. Note that the ink jet printer 10 may be further provided with various kinds of sensors such as a sensor for measuring color or a distance sensor for measuring distance between the printing head 30 and table 1, although illustration of these is omitted.

### [Configuration of Printing Head]

As shown in FIG. 3, the printing head 30 comprises: an ink jet recording head unit 31 mounted on the carriage; and the UV irradiating device 32. The ink jet recording head unit 31 and the UV irradiating device 32 are disposed so that the ink jet recording head unit 31 will not be affected by ultraviolet light irradiated from the UV irradiating device 32. The ink jet recording head unit 31 is installed with a plurality of nozzle arrays 33 having printing ranges of identical width to each other, for example. Each nozzle array 33 has a plurality of ink ejecting nozzles 34 arranged at a constant nozzle pitch in the sub-scanning direction, and driven by a piezoelectric element, for example. Note that the ink jet recording head unit 31 may have parallel pairs of nozzle arrays 33 offset by half a nozzle pitch with respect to each other in the sub-scanning direction, corresponding to a single color. Moreover, the ink jet recording head unit 31 may have a parallelly disposed plurality of heads each having individually divided nozzle arrays 33.

FIG. 3(a) shows an example where the nozzle arrays 33 are provided aligned in a row in the main scanning direction. In this example, the nozzle arrays 33 for ejecting each of the WWYCMKVV UV inks are aligned in this order. FIG. 3(b) shows an example where the nozzle arrays 33 are divided into two groups, one for the YMCK UV inks and one for the WWVV UV inks, and each group is disposed offset from the other in the main scanning direction and the sub-scanning direction. In the former, widths in the main scanning direction and the sub-scanning direction of the head will be compact. Moreover, since the nozzles for YMCK and for WWVV are aligned at the same positions in the sub-scanning direction, it will be easy for ink to be ejected to the same positions in the sub-scanning direction. Note that each nozzle array 33 may adopt another layout configuration. Moreover, in the case where, for example, printing is performed dividing the nozzles into a plurality of areas (half of the nozzles for CMYK inks, and the remainder of the nozzles for WWVV inks), a printing width that printing can be performed for the former will be narrow at half a range of the entirety of the nozzles, while for the latter, the entirety of the nozzles can be used, so ink ejection for YMCK and for WWVV can be performed with good efficiency.

The UV irradiating device 32 is installed on a front side in a head conveying direction of an outward path of the ink jet recording head unit 31, and by control of the control unit 11, irradiates with ultraviolet light (UV) the UV ink that has been ejected onto the recording medium 4. This UV irradiating device 32 may be installed on a rear side in the head conveying direction of the outward path of the ink jet recording head unit 31, or in the case of bidirectional printing being implemented, may be provided on both sides in the main scanning direction of the ink jet recording head unit 31. A UV-LED irradiating device, or the like, may be used as the UV irradiating device 32.

### [Method of Laminated Printing including Lenticular Lens]

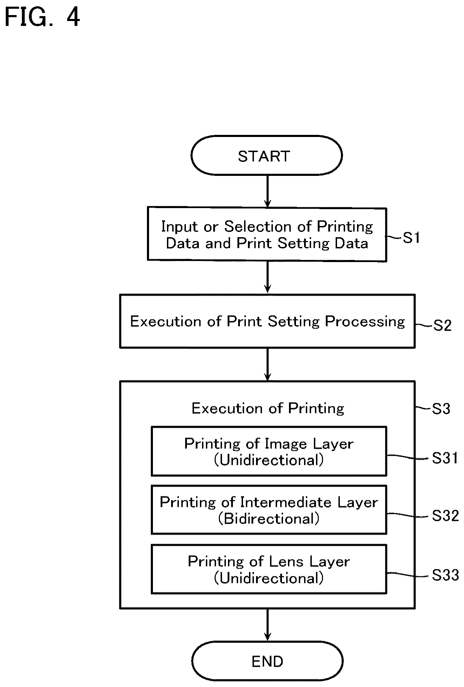

Next, a method of laminated printing of the composite image using the lenticular lens according to the first embodiment will be described with reference to FIGS. 4 to 11. This embodiment shows an example of printing a switchover-oriented composite image by which there is two-level switching between two original images depending on a viewing angle.

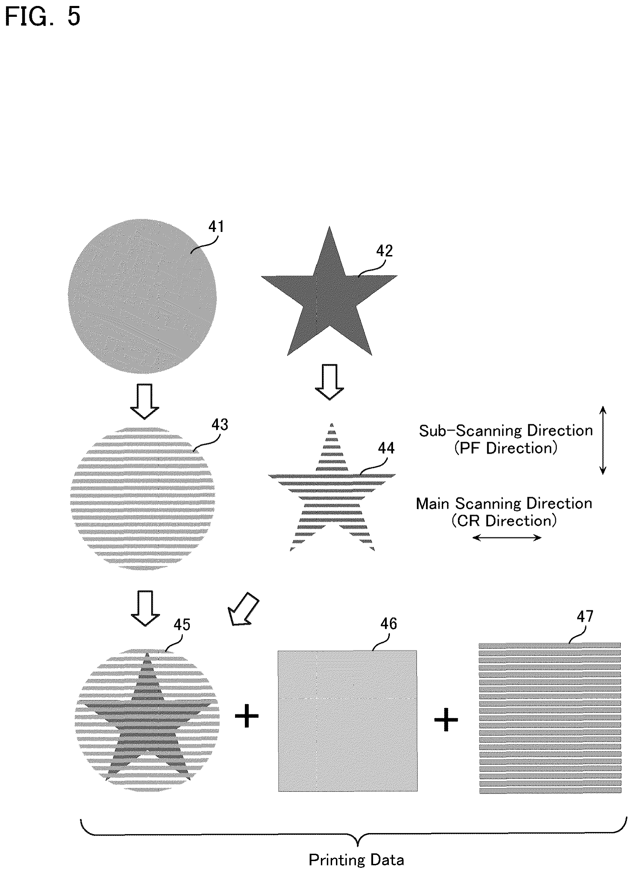

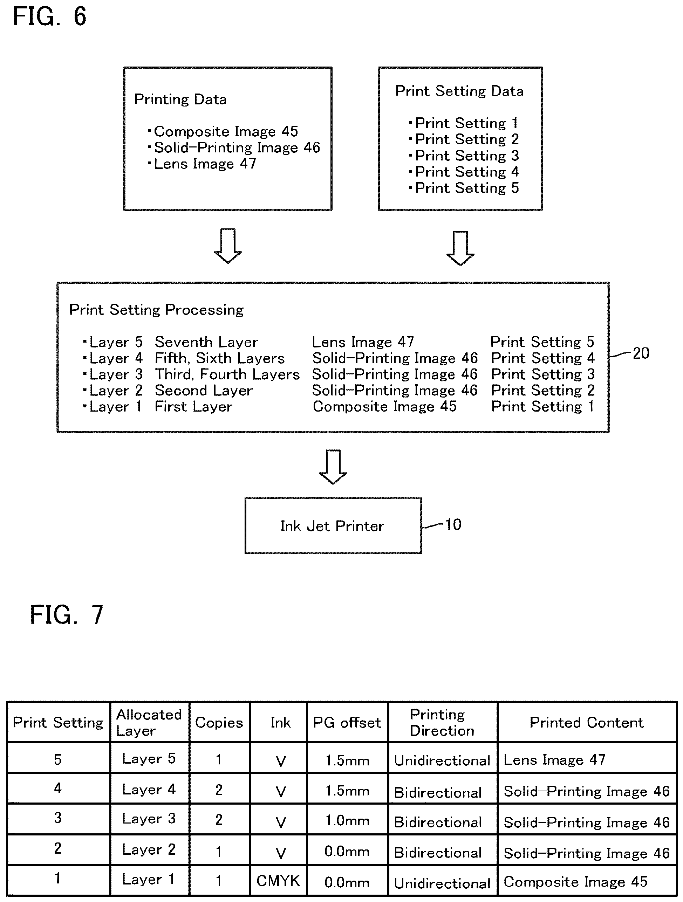

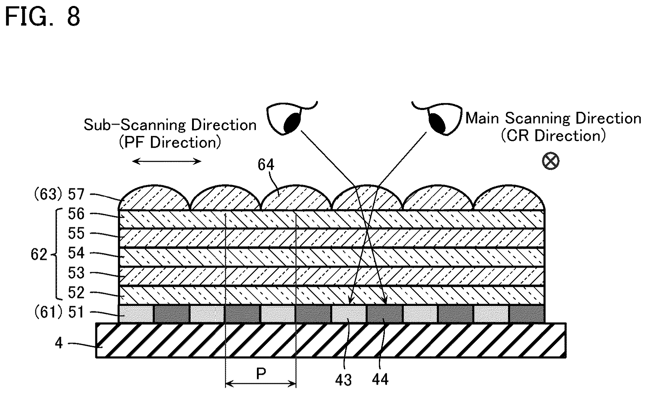

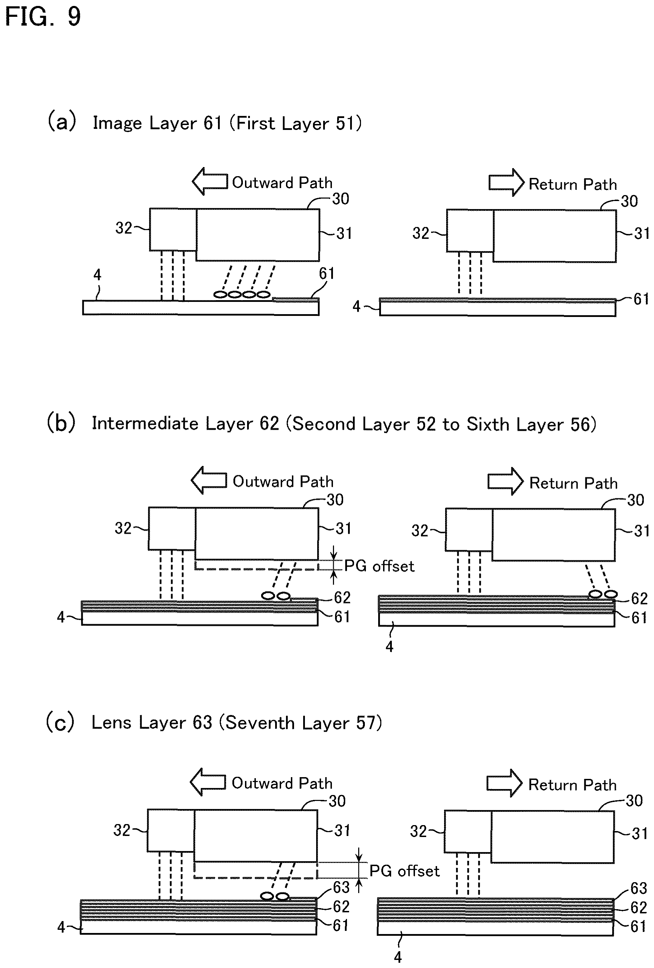

FIG. 4 is a flowchart showing same method of laminated printing. FIG. 5 is a schematic view for explaining the printing data used by same method of laminated printing. FIGS. 6 and 7 are diagrams showing a setting example of each of the printing layers in same method of laminated printing. FIG. 8 is a cross-sectional view of a laminated printing object printed by same method of laminated printing. FIGS. 9 to 11 are each a schematic view for explaining same method of laminated printing.

As shown in FIG. 4, first, the print setting processing device 20 is inputted with or selects the printing data and the print setting data (S1). The printing data includes a composite image 45, a solid-printing image 46, and a lens image 47, as shown in FIG. 5, for example. The composite image 45 can be created as follows. That is, first, a first original image 41 and a second original image 42 (plurality of original images) that are to be a target of printing are inputted, these original images 41, 42 are divided into strip-like shapes in the sub-scanning direction (PF direction) at a pitch which is half of a pitch of the lenticular lens, and every other one removed to create a first divided image 43 and a second divided image 44. Note that in creation of the divided images 43, 44, if a priorly prepared filter enabling an image to be masked in strip-like shapes is employed, the required divided images 43, 44 can be simply created. These divided images 43, 44 are then combined by being disposed alternately in the sub-scanning direction (PF direction) to generate the composite image 45. By this composite image 45 being stored as the printing data along with the lens image 47 that configures the lenticular lens having a printing width matching the composite image 45, a correspondence relationship of the two is maintained. If pitch of the divided images 43, 44 is set to 1/40 inch, for example, then pitch of the lenticular lens created by the lens image 47 will also be set to 1/40 inch in the same way. On the other hand, the solid-printing image 46 included in the printing data is generated to enable the intermediate layer of required thickness to be created by solid-printing, and is used in conjunction with the lens image 47 configuring the lenticular lens. Configurations may be adopted whereby such printing data is created by processing in the print setting processing device 20, or is created using a separate image editing device. Note that the printing data is usually created so that the composite image 45, the solid-printing image 46, and the lens image 47 will be printed in the same printing range. Therefore, printing of the solid-printing image 46 and the lens image 47 will also performed in a printing range where there is no composite image 45. However, if it is desired to limit the printing range in line with the composite image 45, then the printing data may be processed to match the solid-printing image 46 and the lens image 47 to the composite image.

On the other hand, the print setting data includes the print setting information determining the printing conditions of each of the printing layers. The print setting information may include information specifying allocation layer, number of copies, ink kind, offset amount between head and platen, printing direction (unidirectional or bidirectional), and image to be printed. Pitch of the divided images 43, 44 and pitch of the lenticular lens, printing width, thickness of the solid-printing intermediate layer, and so on, are set according to conditions that will optimize physical properties of the ink or ejection amount of the ink used in the ink jet printer 10, irradiation amount by UV-LED, and other parameters. Therefore, not only data of the images, but also the print setting data including the conditions of print setting are inputted or stored along with the printing data. Note that several other usable setting combinations may also be prepared and used as required in the case of other conditions. While in the present embodiment, description is made for a combination of the composite image 45, lens image 47, and print settings in the case of 1/40 inch, it is possible too for a combination of the composite image 45, lens image 47, and print settings in the case of 1/50 inch, for example, to be separately prepared and selectively used as required. Moreover, it is possible for the printing data and the print setting data to be priorly set to a downloadable state to enable files of required conditions thereof to be acquired.

When the printing data and the print setting data have been inputted or selected, next, the print setting processing device 20 executes various kinds of print setting processing of the ink jet printer 10, the RIP, and so on (S2). That is, as shown in FIG. 6, the printing data that includes the composite image 45, the lens image 47 configuring the lenticular lens having a printing width matching this composite image 45, and the solid-printing image 46 creating the intermediate layer, and the print setting data that documents the print setting information for allocating this printing data to each of the printing layers, are read by software of the RIP and so on, and the image data and print setting information are allocated to Layer 1 through Layer 5 determining the printing layers. In this example, a print setting 1 causes Layer 1 to be set with the composite image 45 formed by the color (CMYK) inks. Print settings 2 to 4 cause Layer 2 through Layer 4 to be set with the solid-printing image 46 formed by the varnish (V) ink. The print settings 2 to 4 cause number of copies of Layer 2 through Layer 4 to be respectively set to 1, 2, 2. When the ink is cured and lamination proceeds, distance between the printing head 30 and a new printing surface resulting from the ink on the recording medium 4 having been cured ends up changing, so Layer 2 through Layer 4 are set in the above manner in order for a setting value of a PG gap related to distance between the recording medium 4 and the printing head 30 to be changed to an appropriate value in the respective Layers. Finally, a print setting 5 causes Layer 5 to be set with the lens image 47 formed by the varnish (V) ink.

FIG. 7 shows printing conditions of each of the printing layers to be outputted to the ink jet printer 10 as a result of print setting processing according to the above-mentioned print settings 1 to 5. Here, Layer 3 and Layer 4 each have their number of copies set to 2, so are each set to be formed with a two-layer portion printing layer. Hence, first through seventh layer printing layers are set. In the first layer, the composite image 45 is formed by unidirectional printing with the CMYK inks. In the second through sixth layers, the solid-printing image 46 is formed by bidirectional printing with the V ink. In the seventh layer, the lens image 47 is formed by unidirectional printing with the V ink.

Next, the ink jet printer 10 executes print processing (S3). As shown in FIG. 8, an image layer 61 printed with the composite image 45 is formed in a first layer 51 on the recording medium 4. An intermediate layer 62 printed with the solid-printing image 46 is formed in a second layer 52 through sixth layer 56 on the first layer 51. A lens layer 63 printed with the lens image 47 is formed in a seventh layer 57 on the sixth layer 56. The lens layer 63 forms the lenticular lens consisting of a plurality of long lenses 64 having an arc-shaped cross section, that extend in the main scanning direction and are aligned in the sub-scanning direction. Arrangement pitch P in the sub-scanning direction of the long lenses 64 is equal to arrangement pitch in the sub-scanning direction of the divided images 43, 44, and is equal to two times a width in the sub-scanning direction of each divided fragment of the divided images 43, 44.

Note that in the present embodiment, description is made of a single product being created by a single image. However, a plurality of images may be set in a plurality of places on the recording medium 4, and the plurality of images simultaneously printed, or a plurality of recording media 4 may be priorly prepared on the table 1, each of which is individually printed with an image, and so on, that is, printing should be performed efficiently changing settings of the printing according to application.

As shown in FIG. 9(a), the image layer 61 (first layer 51) is formed by unidirectional printing ejecting the color (CMYK) ink solely on the outward path (S31). The color ink ejected onto the recording medium 4 in the outward path is cured by ultraviolet light (UV) irradiated from the UV irradiating device 32 on a return path. A PG offset (FIG. 7) being an offset value from an initial value of a platen gap (PG) between the ink jet recording head unit 31 and the recording medium 4 is set to 0.0 mm. In the present embodiment, a configuration is adopted whereby when printing of the first layer 51 has ended after the printing head 30 and table 1 have moved relatively and curing of the printed and ejected inks has been performed, the printing head 30 and table 1 return to their initial positions in the main scanning direction and sub-scanning direction for printing of the second layer 52 above the first layer 51. Therefore, when printing the next layer, too, printing can be performed from the same position as for the previous layer. Note that the table 1 need not return to its initial position when printing in the sub-scanning direction has ended, and printing may be performed while it conveys in a returning direction. In that case, time associated with movement of the table 1 can be shortened.

As shown in FIG. 9(b), the intermediate layer 62 (second layer 52 through sixth layer 56) is formed by bidirectional printing ejecting the V (varnish) ink on both the outward path and return path (S32). The V inks ejected onto the image layer 61 in the outward path and return path are both cured by ultraviolet light (UV) irradiated from the UV irradiating device 32 on the return path. As the layers increase, distance between the printing head 30 and a surface of the printed and cured inks narrows, hence height with respect to the recording medium 4 of the printing head 30 needs to be adjusted, and must be increased to an appropriate distance. Therefore, the PG offset (FIG. 7) being the offset value from the initial value of the platen gap between the ink jet recording head unit 31 and the recording medium 4 is set to 0.0 mm in the second layer 52, 1.0 mm in the third and fourth layers 53, 54, and 1.5 mm in the fifth and sixth layers 55, 56. The reason the second layer 52 through sixth layer 56 were allocated to Layer 2 through Layer 4 was in order for the PG offset to be sequentially increased in this way. In the case of the intermediate layer 62, too, when printing of the previous layer has ended, the printing head 30 and table 1 return to their initial positions in the main scanning direction and sub-scanning direction for printing of the next layer. Note that the table 1 need not return to its initial position when printing in the sub-scanning direction has ended, and printing may be performed while it conveys in the returning direction. In that case, time associated with movement of the table 1 can be shortened.

As shown in FIG. 9(c), the lens layer 63 (seventh layer 57) is formed by unidirectional printing ejecting the V (varnish) ink solely on the outward path (S33). The V ink ejected onto the intermediate layer 62 in the outward path is cured by ultraviolet light (UV) irradiated from the UV irradiating device 32 on the return path. The PG offset (FIG. 7) being the offset value from the initial value of the platen gap between the ink jet recording head unit 31 and the recording medium 4 is set to 1.5 mm.

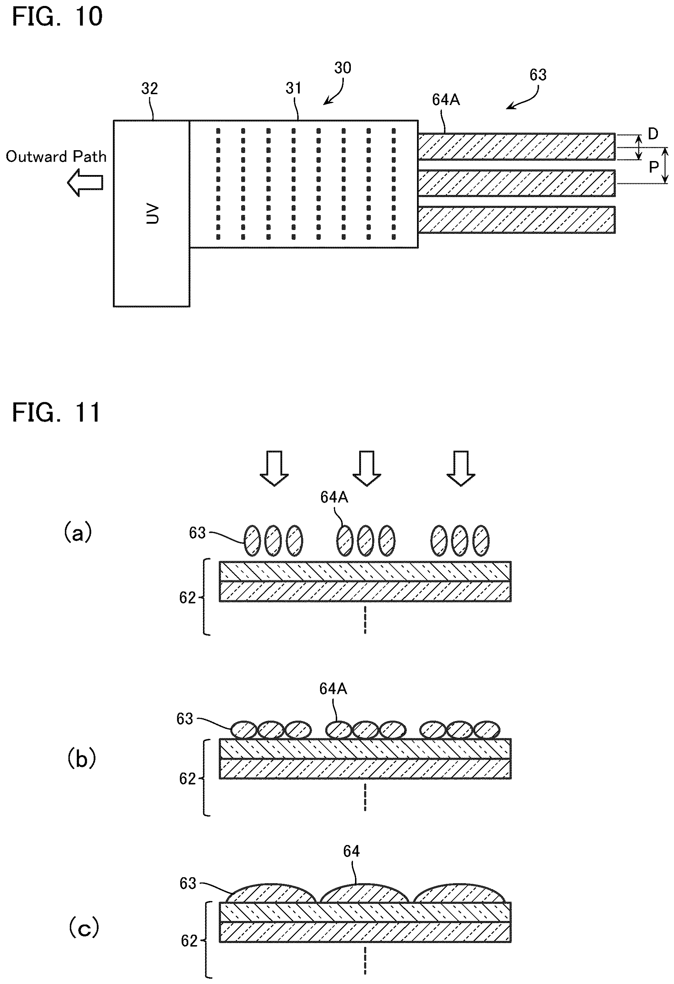

Note that when forming the lens layer 63 based on data of the lens image 47 received from the print setting processing device 20, the control unit 11 prints a plurality of linear patterns 64A with a transparent ink, with a width D narrower than the arrangement pitch P in the sub-scanning direction of the long lenses 64, on the outward path, as shown in FIG. 10. As shown in FIG. 11(a), printing is performed so that the V ink will be ejected from nozzles corresponding to the lens image 47 in the nozzle array 33, and so that the printing width will be filled without any spaces. The ejected V ink exists in an uncured state on the cured V ink of the intermediate layer 62, and amalgamates with the neighboring cured ink to become an integrated ink, as shown in FIG. 11(b). However, the linear ink is still in an uncured state, hence at its end portions in a width direction, it spreads in the sub-scanning direction over the cured V ink. Therefore, if this lens image 47 has its width set to the actual arrangement pitch, there is a possibility that fellow neighboring linear patterns 64A will end up joining up with each other. Hence, width of the lens image 47 is set so as to prevent contact between adjacent linear patterns 64A of the lens image 47 occurring in a state prior to them being cured. A printing width enabling in a state of having function as a lens subsequent to curing, is set. Then, as shown in FIG. 11(c), at a timing that the printing head 30 performs irradiation with UV light on the return path, the transparent ink forming the linear pattern 64A will spread in the sub-scanning direction to precisely attain a close-to-arc-like cross section. Hence, in the present embodiment, the long lenses 64 can be formed with good efficiency by a single outward path printing of the linear patterns 64A.

Note that the timing of curing of the transparent ink may be a timing prior to the adjacent linear patterns 64A consolidating, or may be a timing subsequent to the adjacent linear patterns 64A having consolidated. In the case of a timing subsequent to the adjacent linear patterns 64A having consolidated, it is desirable for the transparent ink to be cured at a timing when the transparent ink has not yet flattened, immediately subsequent to consolidation.

Due to the present embodiment, the image layer 61 and the lens layer 63 are included in the same printing data, and are printed with the same orientation in the main scanning direction, so the two are accurately positioned. If in the case where printing of parallel narrowly-spaced lines is performed, lines extending in the sub-scanning direction are to be printed, in a printing device having a structure where the printing head 30 moves in the main scanning direction, then the printing must be performed with ejection positions of ink in the main scanning direction accurately matched. In the case of printing being performed above where ink has been cured, a relationship between ejection position and impact position of the ink will slightly differ in the lowermost image layer and in the uppermost lens layer, so matching to the same position is difficult. In the present embodiment, lines are created parallelly to the main scanning direction in which the printing head 30 moves, so positioning of the image layer 61 and lens layer 63 is easy even when height of printing has changed. That is, in the present embodiment, the printing head 30 is moved in the main scanning direction and ink thereby ejected from the same nozzles, so effects of height are not readily felt. It is therefore possible for parallel lines to be easily printed. Moreover, regarding the intermediate layer 62 printed with the solid-printing image 46, it is possible for ink to be ejected and for this intermediate layer to be thereby efficiently formed by bidirectional printing. As methods of bidirectionally printing the intermediate layer 62, the following are conceivable, namely, a method where the V ink is overlaid on the outward and return paths to print a two-layer portion in a single return journey, and a method where the V ink is ejected on the outward path, after which the table 1 is moved in the sub-scanning direction, and the V ink is ejected to a different position in the sub-scanning direction on the return path, thereby increasing the range of printing in a single return journey. Either method will enable efficient printing of the intermediate layer. Furthermore, the lens layer 63, too, can be formed by a single time of printing of the linear patterns 64A, hence enabling efficient multi-layer printing.

Note that in the present embodiment, during printing of the lens layer 63, the printing head 30 ejects the V ink while moving in one orientation of the main scanning direction, and performs irradiation with UV light while moving in the other orientation of the main scanning direction. However, the irradiation with UV light may be performed later than at this timing. For example, a configuration may be adopted whereby the printing head 30 ejects the V ink while moving in one orientation of the main scanning direction, and after having moved in the other orientation of the main scanning direction, performs irradiation with UV light while again moving in the one orientation of the main scanning direction. Moreover, it is possible too for the V ink to be ejected on the outward path, the V ink to be ejected without being cured on the return path too, and the ink to be cured by movement on the next outward path and return path, that is, all that is required is that the long lenses 64 can be efficiently created.

### [Second Embodiment]

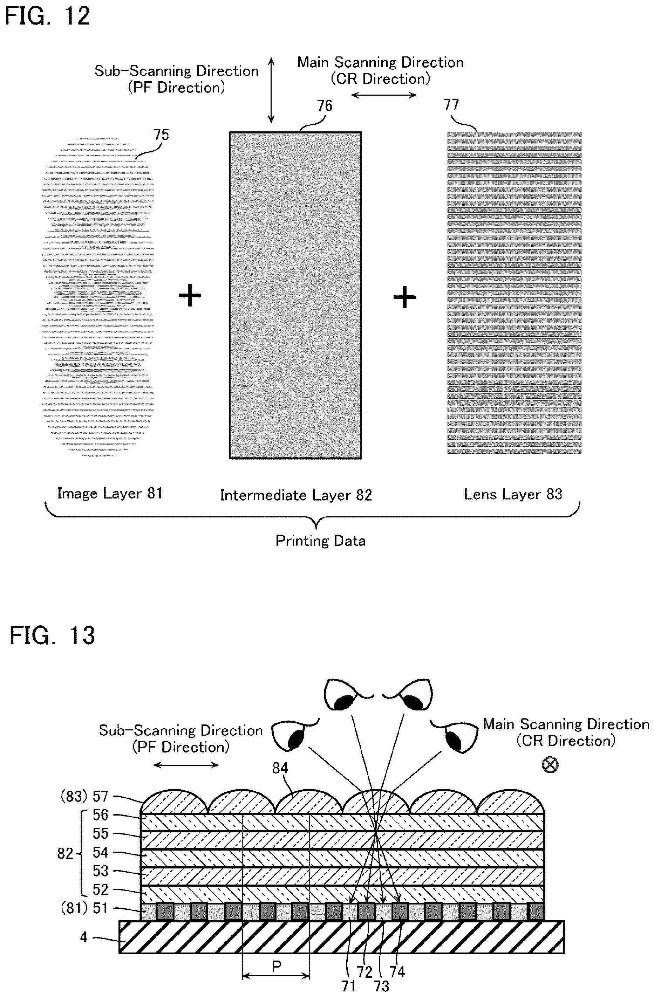

FIGS. 12 and 13 are diagrams for explaining a printing device and printing method according to a second embodiment.

The first embodiment has described a method of printing the switchover-oriented composite image 45 by which there is two-level switching between the two original images 41, 42 depending on a viewing angle. In the second embodiment, there will be described a method of printing an animation-oriented composite image 75 by which there is six-level switching between four original images depending on a viewing angle. In the present embodiment, as shown in FIG. 12, laminated printing is executed based on printing data that includes: an image layer 81 consisting of the composite image 75 composed by the four original images; an intermediate layer 82 consisting of a solid-printing image 76; and a lens layer 83 consisting of a lens image 77. Other configurations are similar to in the first embodiment. Since the composite image 75 and the lens image 77 are stored as the same printing data, it will never occur that images of differing lens widths thereof end up being mistakenly used.

In the present embodiment, as shown in FIG. 13, arrangement pitch P in the sub-scanning direction of long lenses 84 is equal to arrangement pitch in the sub-scanning direction of divided images 71, 72, 73, 74, and is equal to four times a width in the sub-scanning direction of each divided fragment of the divided images 71, 72, 73, 74. In the case where pitch of the lenticular lens is 1/40 inch in the present embodiment, the print setting data used in the first embodiment can be commonly used, moreover, it is possible too for separate print setting data to be prepared.

Similar advantages to the first embodiment can be displayed in the present embodiment too.

### [Third Embodiment]

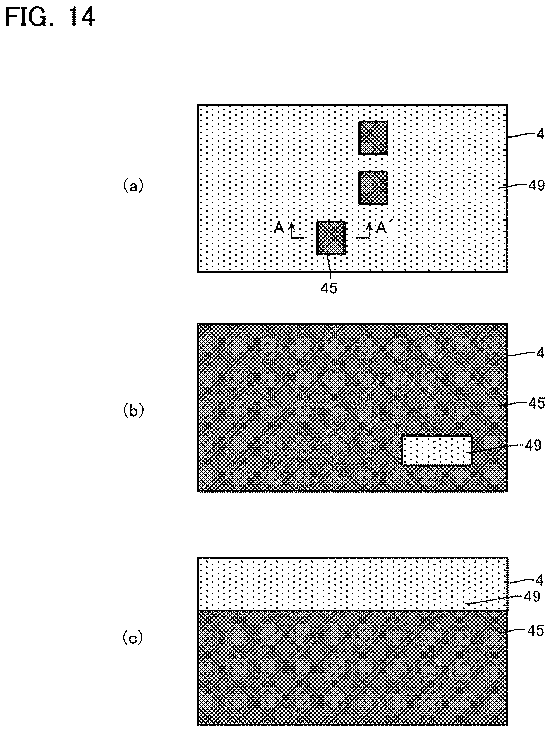

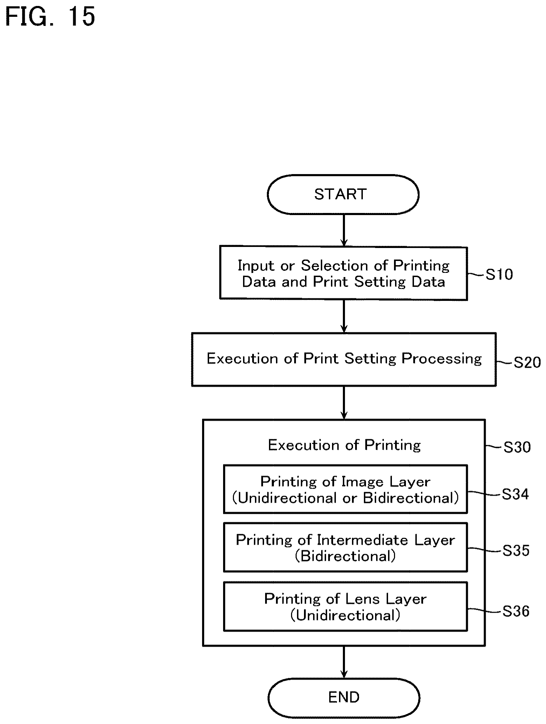

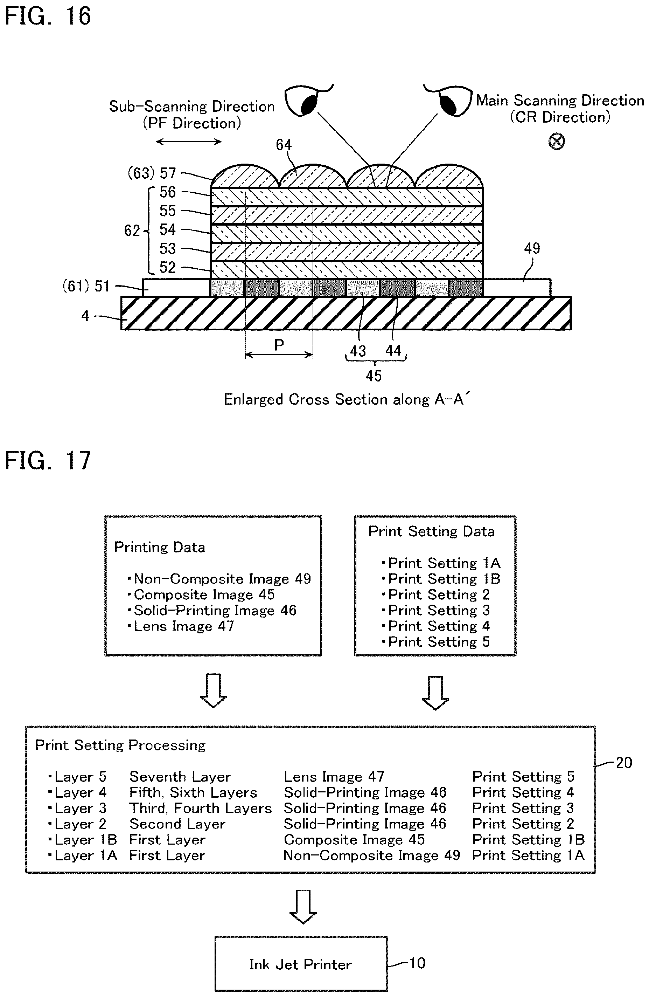

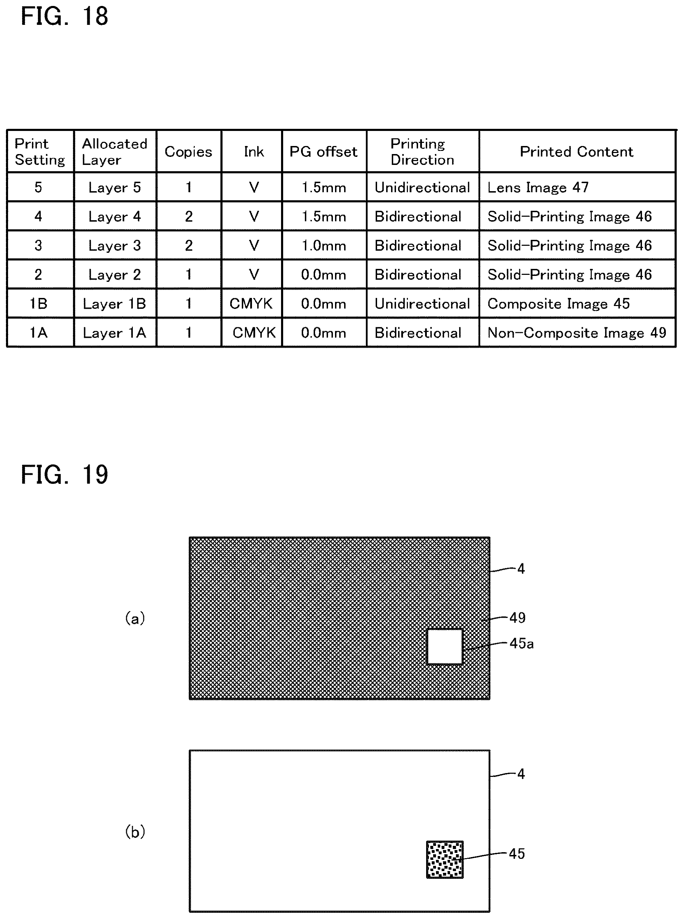

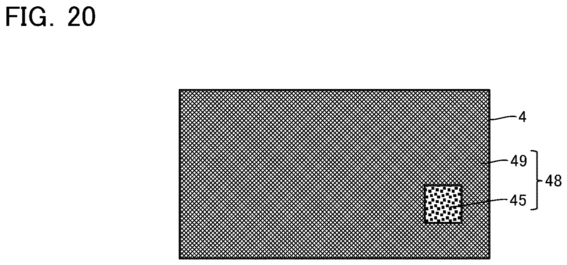

FIG. 14 is a diagram showing an impression of an image printed on a recording medium by a method of laminated printing due to a printing device according to a third embodiment. FIG. 15 is a flowchart showing the method of laminated printing by same printing device. FIG. 16 is an enlarged cross-sectional view taken along the line A-A' of FIG. 14(a). FIGS. 17 and 18 are diagrams showing a setting example of each of printing layers in same method of laminated printing. FIGS. 19 and 20 are diagrams for explaining printing methods of a non-composite image and a composite image in same method of laminated printing. Note that in the descriptions of the drawings from FIG. 14 onwards, descriptions duplicating those of portions that have already been described will be omitted.

As shown in FIG. 14, in the third embodiment, there will be described a method by which the composite image 45 of the kind mentioned above and a non-composite image 49 being an ordinary image such as a background image, are printed on the recording medium 4. FIG. 14(a) shows an impression of an image in which the composite image 45 is included in part of the non-composite image 49, FIG. 14(b) shows an impression of an image in which the non-composite image 49 is included in part of the composite image 45, and FIG. 14(c) shows an impression of the composite image 45 and the non-composite image 49 being divided into fixed regions. The composite image 45 included in the non-composite image 49 in FIG. 14(a) may be at one place, or may be provided at a plurality of places. In the case of the composite image 45 being provided at a plurality of places, the same composite image 45 may be used, or different composite images 45 may be prepared and used. Moreover, the non-composite image 49 may be provided in the whole of the printing range, or may be provided only in required places of the printing range. The non-composite image 49 provided in part of FIG. 14(b) is able to be confirmed without passing through the lenticular lens, so may be used in an image portion for clearly displaying the likes of a company name or product name, for example. FIG. 14(c) is an example where the composite image 45 or the non-composite image 49 is provided in a fixed region in an end portion of the recording medium 4, and should be used selectively according to application, and so on.

As shown in FIG. 15, the print setting processing device 20 is inputted with or selects the printing data and the print setting data (S10). As shown in FIG. 17, for example, the printing data includes the composite image 45, the solid-printing image 46, the lens image 47, and the non-composite image 49 which is printed in a different region from at least a region where the composite image 45 is printed. Note that while in the present embodiment, processing is assumed to be performed so that the solid-printing image 46 and the lens image 47 will be in a printing range matching that of the composite image 45, the present invention is not limited to such a configuration.

When the printing data and the print setting data have been inputted or selected, next, the print setting processing device 20 executes various kinds of print setting processing (S20). That is, as shown in FIG. 17, the printing data that includes the composite image 45, the solid-printing image 46, the lens image 47, and the non-composite image 49, and the print setting data that documents the print setting information for allocating this printing data to each of the printing layers, are read by software of the RIP and so on, and the image data and print setting information are allocated to Layer 1 through Layer 5 determining the printing layers.

For example, in the case where the non-composite image 49 and the composite image 45 printed in a hollowed-out portion of part of this non-composite image 49 are printed separately in the same layer on the recording medium 4, shown in FIG. 16, a print setting 1A causes Layer 1A to be set with the non-composite image 49 formed by the color (CMYK) inks. Moreover, a print setting 1B causes Layer 1B to be set with the composite image 45 formed by the color (CMYK) inks. Settings of Layers 2 to 5 by print settings 2 to 5 are similar to as mentioned above.

FIG. 18 shows the printing conditions of each of the printing layers to be outputted to the ink jet printer 10 as a result of print setting processing due to the above-mentioned print settings 1A, 1B, and 2 to 5. Now, while it is as described above regarding setting of the first to seventh layers of printing layers, in the first layer, the non-composite image 49 is formed by bidirectional printing with the CMYK inks, and the composite image 45 is formed by unidirectional printing with the CMYK inks. Formation of the solid-printing image 46 and lens image 47 of the second through seventh layers is performed on the composite image 45.

Then, the ink jet printer 10 executes print processing (S30). As shown in FIG. 16, the image layer 61 printed with the non-composite image 49 and with the composite image 45 are formed separately by bidirectional printing and by unidirectional printing in the first layer 51 on the recording medium 4 (S34). The intermediate layer 62 (the second layer 52 through sixth layer 56) printed with the solid-printing image 46 is formed by bidirectional printing ejecting the varnish (V) ink (S35), and the lens layer 63 (the seventh layer 57) printed with the lens image 47 is formed by unidirectional printing ejecting the varnish (V) ink (S36). The non-composite image 49 in the image layer 61 may also have the intermediate layer 62 formed thereon, for example.

FIG. 19 is a diagram for explaining a first printing method of the non-composite image 49 and the composite image 45.

In the first printing method, the non-composite image 49 and the composite image 45 are printed separately. That is, as shown in FIG. 19(a), the non-composite image 49 is printed on the recording medium 4 in such a way that a hollow 45a corresponding to a printing position of the composite image 45 will be formed in part of the non-composite image 49. Next, the composite image 45 of the kind shown in FIG. 19(b) coinciding with this hollow 45a is printed on the recording medium 4. Note that the image layer 61 printed with the non-composite image 49 may be formed in any of the allocated layers Layer 1 through Layer 5, or may be formed in an allocated layer a layer below Layer 1 and allocated layer a layer above Layer 5, in addition to in the above-mentioned layer. That is, when the non-composite image 49 not having an image overlaid on the composite image 45 is printed, printing may be performed at any timing of the print settings, but printing should be performed in a Layer where there are no changes to printing of the composite layer 45 and to the PG (platen gap). While the present embodiment describes an example where the non-composite image 49 is printed in Layer 1A and the composite image 45 is printed in Layer 1B, this may be changed as required, such as by setting so that in the case where a plurality of non-composite images 49 or composite images 45 whose printing ranges do not overlap are to be printed, printing will be performed on a plurality of separate occasions in the likes of Layer 1A, Layer 1B, Layer 1C, Layer 1D, for example.

FIG. 20 is a diagram for explaining a second printing method of the non-composite image 49 and the composite image 45.

In the second printing method, as shown in FIG. 20, the non-composite image 49 and the composite image 45 are printed together on the recording medium 4. In this case, for example, a new integrated image 48 including the composite image 45 and the non-composite image 49 should be created as data, and the new integrated image 48 should be formed in the first layer 51 by unidirectional or bidirectional printing. Since printing of both images, that is, the composite image 45 and the non-composite image 49, can be done at once, printing of good efficiency is possible. Note that in this case, all that is required is that by selection of bidirectional printing or unidirectional printing, either one of the print settings, that is, print setting 1A or print setting 1B of FIG. 18, for example, be used to print the new integrated image 48 instead of the non-composite image 49 or composite image 45, and that the unused other one of the print settings be skipped. Moreover, for example, the new integrated image 48 may be used instead of the composite image 45 in print setting 1 of FIG. 7, and printing be performed setting the printing direction to unidirectional or bidirectional, or several print settings may be provided as the print setting data to be used.

Furthermore, the composite image 45 may be printed overlaid on the non-composite image 49. In the case of the non-composite image 49 being priorly printed on the recording medium 4, and in the case of the non-composite image 49 being already printed at a printing place of the composite image 45 on the recording medium 4, the composite image 45 is printed in a different layer from the printing layer of the non-composite image 49. For example, a configuration may be adopted whereby in a layer below Layer 1, a solid-printing image 46 due to the white (W) ink is formed (a concealing layer is formed) below the printing range of the composite image 45 to conceal the image located below, and the composite image 45, and so on, are formed on this solid-printing image 46. Moreover, in the case of direct printing being performed on a colored recording medium 4, too, a configuration may be adopted whereby a solid-printing image 46 due to the white (W) ink is formed below the printing range of the composite image 45 so as to prevent a printing result being affected by color of the recording medium 4.

The present embodiment not only enables similar operational advantages to in the first and second embodiments to be displayed, but also enables the composite image 45 to be easily printed in its printing range on the recording medium 4 along with the non-composite image 49.

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made without departing from the spirit of the inventions. The accompanying claims and their equivalents are intended to cover such forms or modification as would fall within the scope and spirit of the inventions.

### DESCRIPTION OF REFERENCE NUMERALS

- 1: table
- 2: carriage drive mechanism
- 3: table drive mechanism
- 4: recording medium
- 5: table elevating mechanism
- 10: ink jet printer
- 11: control unit
- 12: display
- 13: operating unit
- 14: carriage drive unit
- 15: table drive unit
- 16: table elevating drive unit
- 17: head drive unit
- 18: memory unit
- 19: input/output I/F
- 20: print setting processing device
- 30: printing head
- 32: ultraviolet (UV) irradiating device

## Claims

1. A printing device comprising:
a printing head having a nozzle and a curing device, the nozzle ejecting an ink including a color ink and a transparent ink, and the curing device curing the ink that has been ejected from the nozzle and has attached onto a recording medium;
a drive mechanism that moves the printing head relatively to the recording medium in a main scanning direction and in a sub-scanning direction intersecting the main scanning direction;
a control unit that controls the printing head and the drive mechanism to execute print processing of a plurality of printing layers onto the recording medium using the color ink and the transparent ink; and
a print setting processing device that performs print setting processing of the plurality of printing layers based on printing data and print setting data,
the printing data including:
a composite image obtained by dividing a plurality of original images in the sub-scanning direction and combining the divided plurality of original images;
a solid-printing image; and
a lens image consisting of a plurality of long lenses aligned in the sub-scanning direction correspondingly to the composite image,
the print setting data including print setting information for setting printing conditions of each of the printing layers, and
the print setting processing device,
based on the print setting data,
setting an image layer obtained by printing the composite image with the color ink,
setting an intermediate layer obtained by printing the solid-printing image on the image layer with the transparent ink,
setting a lens layer obtained by printing the lens image on the intermediate layer with the transparent ink, and
setting so that when the lens layer is formed, the printing head ejects the transparent ink onto the recording medium while the printing head is moving in the main scanning direction, and the transparent ink on the recording medium is cured by the curing device.

2. The printing device according to claim 1, wherein
the print setting processing device sets so that when the lens layer is formed, the printing head ejects the transparent ink onto the recording medium while the printing head is moving in the main scanning direction, and the ejected transparent ink on the recording medium is cured by the curing device prior to the transparent ink consolidating on the recording medium or subsequent to it having consolidated on the recording medium.

3. The printing device according to claim 1, wherein
the print setting processing device sets so that when the lens layer is formed, the printing head ejects the transparent ink onto the recording medium solely while the printing head is moving in one orientation of the main scanning direction, and the transparent ink on the recording medium is cured by the curing device while the printing head is moving in the other orientation of the main scanning direction.

4. The printing device according to claim 1, wherein
the print setting processing device sets so that
the image layer and the lens layer are formed by the printing head ejecting the ink onto the recording medium solely while the printing head is moving in a common one orientation of the main scanning direction, and
the intermediate layer is formed by the printing head ejecting the ink onto the recording medium while the printing head is moving in both directions of the main scanning direction.

5. The printing device according to claim 1, wherein
the print setting processing device sets so that the intermediate layer consists of a plurality of the printing layers.

6. The printing device according to claim 1, wherein
the lens image is created so that when the lens layer is formed, the lens image has a width narrower than a spacing in the sub-scanning direction of the long lenses.

7. The printing device according to claim 1, wherein
the print setting data includes at least one of information related to a scanning direction during ink ejection of the printing head, a gap between the printing head and the recording medium during ink ejection of the printing head, and the ink being used during ink ejection of the printing head.

8. The printing device according to claim 1, wherein
the printing data further includes a non-composite image printed in a different region from at least a region where the composite image is printed, and
the print setting processing device, based on the printing data, sets an image layer obtained by printing the composite image and the non-composite image with the color ink.

9. The printing device according to claim 1, wherein
the printing data includes an integrated image that includes the composite image and a non-composite image printed in a different region from a region where the composite image is printed, and
the print setting processing device, based on the printing data, sets an image layer obtained by printing the integrated image with the color ink.

10. The printing device according to claim 1, wherein
the printing data further includes the solid-printing image printed at least below a region where the composite image is printed, and
the print setting processing device, based on the printing data, sets a concealing layer obtained by printing the solid-printing image below the composite image with a white ink.

11. A printing method by which a printing head is moved relatively to a recording medium in a main scanning direction and in a sub-scanning direction intersecting the main scanning direction, an ink including a color ink and a transparent ink is ejected from the printing head onto the recording medium, and the ink that has attached onto the recording medium is cured by a curing device to print a plurality of printing layers onto the recording medium using the color ink and the transparent ink,
wherein based on printing data that includes: a composite image obtained by dividing a plurality of original images in the sub-scanning direction and combining the divided plurality of original images; a solid-printing image; and a lens image consisting of a plurality of long lenses aligned in the sub-scanning direction correspondingly to the composite image, and based on print setting data that includes print setting information for setting printing conditions of each of the printing layers,
the composite image is printed with the color ink, whereby an image layer is formed,
the solid-printing image is printed on the image layer with the transparent ink, whereby an intermediate layer is formed,
the lens image is printed on the intermediate layer with the transparent ink, whereby a lens layer is formed, and
when the lens layer is formed, the printing head ejects the transparent ink onto the recording medium while the printing head is moving in the main scanning direction, and the transparent ink on the recording medium is cured by the curing device.

12. The printing method according to claim 11, wherein
when the lens layer is formed, the printing head ejects the transparent ink onto the recording medium solely while the printing head is moving in the main scanning direction, and the ejected transparent ink on the recording medium is cured by the curing device prior to the transparent ink consolidating on the recording medium or subsequent to it having consolidated on the recording medium.

13. The printing method according to claim 11, wherein
when the lens layer is formed, the printing head ejects the transparent ink onto the recording medium solely while the printing head is moving in one orientation of the main scanning direction, and the transparent ink on the recording medium is cured by the curing device while the printing head is moving in the other orientation of the main scanning direction.

14. The printing method according to claim 11, wherein
based on the printing data including a non-composite image printed in a different region from at least a region where the composite image is printed, and based on the print setting data, the composite image and the non-composite image are printed with the color ink, whereby the image layer is formed.

15. The printing method according to claim 11, wherein
based on the printing data including an integrated image that integrates the composite image and a non-composite image printed in a different region from a region where the composite image is printed, and based on the print setting data, the integrated image is printed with the color ink, whereby the image layer is formed.
